# EUROPEAN PATENT APPLICATION

(11) **EP 4 726 882 A1**
(43) Date of publication of application: **15.04.2026**
(21) Application number: 25203300.6
(22) Date of filing: 19.09.2025
(51) Int. Cl.: H01M 50/209, H01M 50/211, H01M 50/593, H01M 50/291

(54) **ELECTRICAL ENERGY STORAGE MODULE AND SPACER USED FOR THE SAME**

(30) Priority: 10.10.2024 JP 2024177922
(71) Applicant: Prime Planet Energy & Solutions, Inc., Chuo-ku, Tokyo 103-0022 (JP)
(72) Inventor: TERAMOTO, Tsutomu, Tokyo, 103-0022 (JP)
(74) Representative: Kuhnen & Wacker Patent- und Rechtsanwaltsbüro PartG mbB

(57) **Abstract**

An electrical energy storage module (500) disclosed herein includes first and second electrical energy storage devices (100), and a spacer (200). The spacer (200) includes a base part (290), a first uneven structure (210) that is provided on a first surface (290Rr) of the base part (290) and includes a plurality of first protrusion parts (210p) and a first depression part (210r), and a second uneven structure (220) that is provided on a second surface (290F) of the base part (290) and includes a second protrusion part (220p). The second protrusion part (220p) of the second uneven structure (220) is provided at a position corresponding to the first depression part (210r) of the first uneven structure (210).

## Description

### BACKGROUND OF THE DISCLOSURE

### 1. Field

The present disclosure relates to an electrical energy storage module and a spacer used for the same.

### 2. Background

Conventionally, an electrical energy storage module including a plurality of electrical energy storage devices disposed along an arrangement direction, a spacer disposed between the plurality of electrical energy storage devices, and a restriction mechanism that restricts the plurality of electrical energy storage devices and the spacer in the arrangement direction has been widely used (for example, Japanese Patent Application Publication No. 2006-253149 and Japanese Patent Application Publication No. 2017-126430).

### SUMMARY

According to Japanese Patent Application Publication No. 2006-253149, etc., some electrical energy storage devices can expand as charging and discharging are repeated. In particular, the electrical energy storage devices that have increased in capacity recently tend to expand largely. Accordingly, the compression rate of the spacer tends to become high. The present inventor's examination indicates that the increase in compression rate of the spacer causes the reaction force for the electrical energy storage device or the like to suddenly increase exponentially because the expansion of the electrical energy storage device cannot be absorbed completely, which is a problem. In view of this, the spacer is required to absorb the expansion of the electrical energy storage device and press the electrical energy storage device with a predetermined load stably.

The present disclosure has been made in view of the above circumstances, and a main object thereof is to provide a novel electrical energy storage module that can stably press an electrical energy storage device, and a spacer.

An electrical energy storage module according to the present disclosure includes a first electrical energy storage device and a second electrical energy storage device that are disposed along an arrangement direction, a spacer that is disposed between the first electrical energy storage device and the second electrical energy storage device, and a restriction mechanism that restricts the first electrical energy storage device, the second electrical energy storage device, and the spacer in the arrangement direction. The spacer includes a base part with a flat plate shape that includes a first surface facing the first electrical energy storage device and a second surface facing the second electrical energy storage device and is configured to be elastically deformable in the arrangement direction, a first uneven structure that is provided on the first surface of the base part and includes a plurality of first protrusion parts projecting to a side of the first electrical energy storage device and a first depression part provided between the adjacent first protrusion parts, and a second uneven structure that is provided on the second surface of the base part and includes a second protrusion part projecting at least to a side of the second electrical energy storage device, and the second protrusion part of the second uneven structure is provided at a position corresponding to the first depression part of the first uneven structure.

In the aforementioned spacer, when the electrical energy storage device expands and a load is applied from the arrangement direction, force of "pulling" is generated in the base part between the first protrusion part and the second protrusion part. By the operation of this pulling, the application of excessive load on the electrical energy storage device can be suppressed and the electrical energy storage device can be stably pressed.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage module according to an embodiment;
FIG. 2 is a perspective view schematically illustrating an electrical energy storage device in FIG. 1;
FIG. 3 is a schematic longitudinal cross-sectional view taken along line III-III in FIG. 2;
FIG. 4 is a partial perspective view schematically illustrating a part of a spacer in FIG. 1;
FIG. 5 is a partial longitudinal cross-sectional view of the spacer in FIG. 4;
FIG. 6A represents results of simulation in which the spacer is compressed, and FIG. 6B is a partial enlarged view of FIG. 6A; and
FIG. 7 represents results of simulation expressing a relation between the compression rate and the reaction force of the spacer.

### DETAILED DESCRIPTION OF THE PREFERRED EMBODIMENTS

Hereinafter, preferred embodiments of an electrical energy storage module disclosed herein will be described with reference to the drawings as appropriate. Matters that are other than matters particularly mentioned in the present specification and that are necessary for the implementation of the present disclosure (for example, the general configuration and manufacturing process of an electrical energy storage module and an electrical energy storage device that do not characterize the present disclosure) can be grasped as design matters of those skilled in the art based on the prior art in the relevant field. An electrical energy storage module disclosed herein can be implemented on the basis of the disclosure of the present specification and common technical knowledge in the relevant field.

Note that in the drawings below, the members and parts with the same operation are denoted by the same reference sign and the overlapping description may be omitted or simplified. Moreover, in the present specification, the notation "A to B" for a range signifies a value more than or equal to A and less than or equal to B, and is meant to encompass also the meaning of being "preferably more than A" and "preferably less than B".

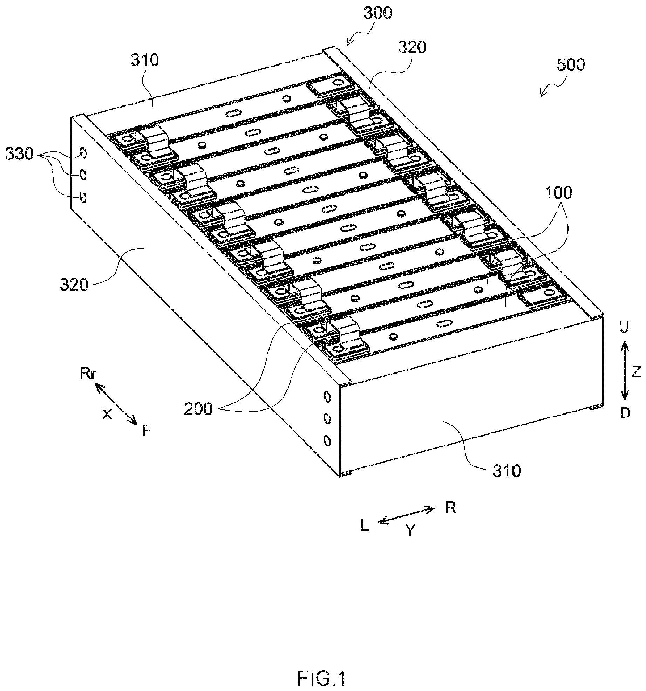

FIG. 1 is a perspective view schematically illustrating an electrical energy storage module 500 according to an embodiment. The electrical energy storage module 500 includes a plurality of electrical energy storage devices (a first electrical energy storage device and a second electrical energy storage device) 100 that are disposed along an arrangement direction X, a spacer 200 that is disposed between the electrical energy storage devices 100 (the first electrical energy storage device 100 and the second electrical energy storage device 100) adjacent to each other in the arrangement direction X, and a restriction mechanism 300 that restricts the plurality of electrical energy storage devices 100 and the spacer 200 in the arrangement direction X. In the following description, reference signs F, Rr, L, R, U, and D in the drawings respectively denote front, rear, left, right, up, and down, and reference signs X, Y, and Z in the drawings respectively denote a thickness direction of the electrical energy storage device 100, a width direction that is orthogonal to the thickness direction, and a height direction that is orthogonal to the thickness direction and the width direction. The thickness direction X also corresponds to the arrangement direction of the electrical energy storage devices 100. These directions are defined however for convenience of explanation, and do not limit the manner in which the electrical energy storage module 500 is disposed.

The restriction mechanism 300 is a mechanism that restricts the plurality of electrical energy storage devices 100 and the spacer 200 in the arrangement direction X. The restriction mechanism 300 is configured to apply a predetermined restriction load on the plurality of electrical energy storage devices 100 and the spacer 200 from the arrangement direction X. The restriction mechanism 300 here includes a pair of end plates 310, a pair of side plates 320, and a plurality of screws 330. The pair of end plates 310 and the pair of side plates 320 are preferably made of a metal. However, the pair of end plates 310 and/or the pair of side plates 320 may be partially made of resin.

The pair of end plates 310 are disposed at both ends of the electrical energy storage module 500 in the arrangement direction X. The pair of end plates 310 hold the plurality of electrical energy storage devices 100 and the spacer 200 therebetween in the arrangement direction X.

The pair of side plates 320 link between the pair of end plates 310. The pair of side plates 320 are fixed to the end plates 310 by the plurality of screws 330 so that a restriction load is generally about 10 to 15 kN, for example. Thus, the restriction load is applied on the plurality of electrical energy storage devices 100 and the spacer 200 from the arrangement direction X and accordingly, the electrical energy storage module 500 is held integrally. The structure of the restriction mechanism is, however, not limited to this example. In another example, the restriction mechanism 300 may alternatively include a plurality of restriction bands, bind bars, or the like instead of the side plates 320.

The plurality of electrical energy storage devices 100 are arranged between the pair of end plates 310 along the arrangement direction X (the thickness direction X of the electrical energy storage device 100). The spacer 200 is disposed between the electrical energy storage devices 100 that are adjacent to each other in the arrangement direction X. In this embodiment, the electrical energy storage devices 100 and the spacer 200 are arranged alternately in the arrangement direction X.

The electrical energy storage device 100 is a device capable of being repeatedly charged and discharged. Note that in the present specification, the term "electrical energy storage device" refers to a concept encompassing secondary batteries such as lithium ion secondary batteries and nickel-hydrogen batteries and capacitors using a chemical reaction, such as lithium ion capacitors and pseudo-capacitors. In addition, the shape, the size, the number, the arrangement, and the like of the plurality of electrical energy storage devices 100 included in the electrical energy storage module 500 are not limited to the aspect disclosed herein, and can be changed as appropriate.

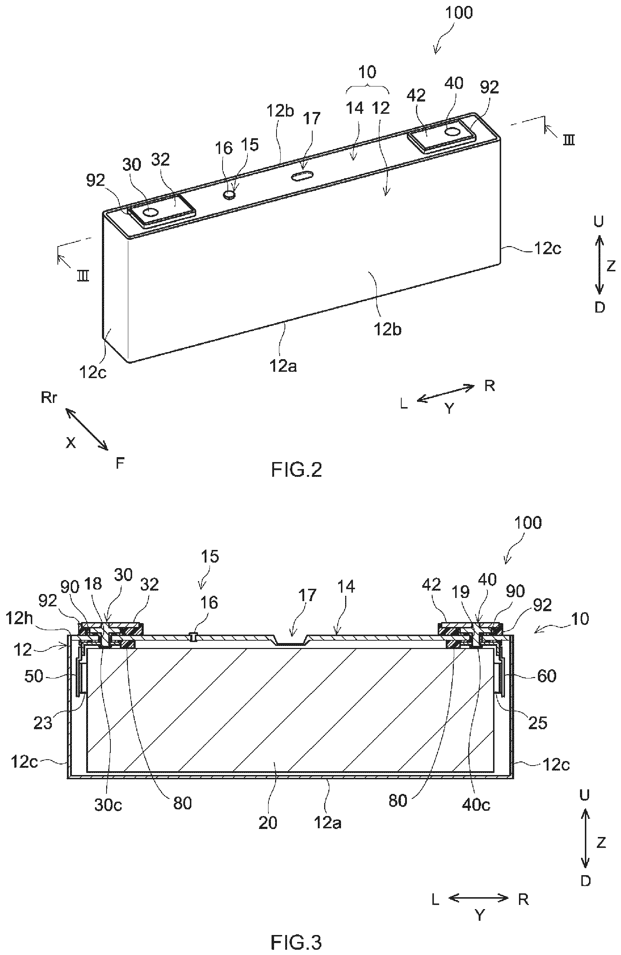

FIG. 2 is a perspective view of the electrical energy storage device 100. As illustrated in FIG. 1 and FIG. 2, every electrical energy storage device 100 has a flat and square shape, and has the same shape here. The plurality of electrical energy storage devices 100 are disposed so that their long side surfaces 12b to be described below face each other here. The plurality of electrical energy storage devices 100 are arranged so that the long side surfaces 12b are substantially parallel to each other (error in manufacture or the like is allowable).

FIG. 3 is a schematic longitudinal cross-sectional view taken along line III-III in FIG. 2. As illustrated in FIG. 3, the electrical energy storage device 100 here includes a battery case 10, an electrode body 20, a positive electrode terminal 30, a negative electrode terminal 40, and an electrolyte solution (not illustrated). The electrical energy storage device 100 is a nonaqueous electrolyte solution secondary battery here, and specifically a lithium ion secondary battery.

The battery case 10 is a housing that accommodates the electrode body 20 and an electrolyte solution. As illustrated in FIG. 2, the external shape of the battery case 10 is a flat and bottomed cuboid shape (square shape). A conventionally used material can be used for the battery case 10, without particular limitations. The battery case 10 is preferably made of metal, and for example, more preferably made of aluminum, an aluminum alloy, iron, an iron alloy, or the like. As illustrated in FIG. 3, the battery case 10 includes an exterior body 12 including an opening 12h and a sealing plate (lid body) 14 that seals the opening 12h.

As illustrated in FIG. 2, the exterior body 12 has a bottomed square tubular shape and includes a bottom surface 12a with a substantially rectangular shape including long sides and short sides, a pair of long side surfaces 12b extending from the long sides of the bottom surface 12a and facing each other, and a pair of short side surfaces 12c extending from the short sides of the bottom surface 12a and facing each other. The bottom surface 12a faces the opening 12h (see FIG. 3). Note that in the present specification, the term "substantially rectangular shape" encompasses, in addition to a perfect rectangular shape (rectangle), for example, a shape whose corner connecting a long side and a short side of the rectangular shape is rounded (rounded corner), a shape whose corner includes a notch, and the like.

The long side surface 12b is a surface facing the spacer 200. As illustrated in FIG. 2, the long side surface 12b is flat. The long side surface 12b is in direct contact with the spacer 200 here. In another embodiment, however, the long side surface 12b may face the spacer 200 through another member. In a plan view, the long side surface 12b is larger in area than the short side surface 12c. In a case of a high-capacity type that is used for a vehicle or the like, the area of the long side surface 12b may be about 10,000 mm² or more, and is preferably 15,000 mm² or more, more preferably 20,000 mm² or more, still more preferably 25,000 mm² or more, and particularly preferably 30,000 mm² or more, although there is no particular limitation.

As illustrated in FIG. 1, the sealing plate 14 has a substantially rectangular shape in the plan view. The sealing plate 14 is a plate-shaped member that extends along an XY plane as illustrated in FIG. 2. As illustrated in FIG. 3, the sealing plate 14 is attached to the exterior body 12 so as to cover the opening 12h. The sealing plate 14 faces the bottom surface 12a of the exterior body 12. The sealing plate 14 is substantially rectangular in shape. The battery case 10 is unified in a manner that the sealing plate 14 is joined (preferably, joined by welding) to a periphery of the opening 12h of the exterior body 12. The battery case 10 is hermetically sealed (closed).

As illustrated in FIG. 3, a liquid injection hole 15, a discharge valve 17, and two terminal extraction holes 18 and 19 are provided in the sealing plate 14. The liquid injection hole 15 is provided for the purpose of injecting the electrolyte solution into the battery case 10 after the sealing plate 14 is assembled to the exterior body 12. The liquid injection hole 15 is sealed by a sealing member 16. The discharge valve 17 is configured to break when the pressure in the battery case 10 becomes more than or equal to a predetermined value so as to discharge the gas out of the battery case 10. The terminal extraction holes 18 and 19 penetrate the sealing plate 14 in the height direction Z.

The positive electrode terminal 30 is disposed at an end part of the sealing plate 14 on one side in the width direction Y (left end part in FIG. 2 and FIG. 3). The negative electrode terminal 40 is disposed at an end part of the sealing plate 14 on the other side in the width direction Y (right end part in FIG. 2 and FIG. 3). As illustrated in FIG. 3, the positive electrode terminal 30 and the negative electrode terminal 40 are respectively inserted to the terminal extraction holes 18 and 19 and extend to the outside from the inside of the sealing plate 14. The positive electrode terminal 30 and the negative electrode terminal 40 are here caulked to a peripheral part of the sealing plate 14 that surrounds the terminal extraction holes 18 and 19 by a caulking process. Caulking parts 30c and 40c are formed at an end part of the positive electrode terminal 30 and the negative electrode terminal 40 on the exterior body 12 side (lower end part in FIG. 3). Thus, the positive electrode terminal 30 and the negative electrode terminal 40 are fixed to the sealing plate 14.

As illustrated in FIG. 3, the positive electrode terminal 30 is electrically connected to a positive electrode tab 23 of the electrode body 20 through a positive electrode current collecting member 50 inside the exterior body 12. The positive electrode terminal 30 is insulated from the sealing plate 14 by an internal insulation member 80 and a gasket 90. The negative electrode terminal 40 is electrically connected to a negative electrode tab 25 of the electrode body 20 through a negative electrode current collecting member 60 inside the exterior body 12. The negative electrode terminal 40 is insulated from the sealing plate 14 by the internal insulation member 80 and the gasket 90.

As illustrated in FIG. 2 and FIG. 3, a positive electrode external conductive member 32 and a negative electrode external conductive member 42, each having a plate shape, are attached to an external surface of the sealing plate 14. The positive electrode external conductive member 32 is electrically connected to the positive electrode terminal 30. The negative electrode external conductive member 42 is electrically connected to the negative electrode terminal 40. The positive electrode external conductive member 32 and the negative electrode external conductive member 42 are insulated from the sealing plate 14 by an external insulation member 92.

As illustrated in FIG. 1, a bus bar for electrically connecting the plurality of electrical energy storage devices 100 to each other is attached to the positive electrode external conductive member 32 and the negative electrode external conductive member 42. Here, in the two electrical energy storage devices 100 that are adjacent to each other in the arrangement direction X, the positive electrode external conductive member 32 of one electrical energy storage device 100 and the negative electrode external conductive member 42 of the other electrical energy storage device 100 are electrically connected to each other by the bus bar. Thus, the electrical energy storage module 500 is electrically connected in series. However, the connection method between the plurality of electrical energy storage devices 100 is not limited to the series connection and may be, for example, parallel connection, multiple series-multiple parallel connection, or the like.

The electrode body 20 includes a positive electrode and a negative electrode. The structure of the electrode body 20 may be similar to the conventional structure thereof, without particular limitations. The number of electrode bodies 20 to be disposed in one battery case 10 is not limited in particular and may be one or two or more (plural). The electrode body 20 here is a wound electrode body with a flat shape in which the positive electrode with a band shape and the negative electrode with a band shape are stacked via a separator in an insulated state and wound using a winding axis as a center. The positive electrode includes a positive electrode current collector with a band shape and a positive electrode active material layer provided in a band shape along a longitudinal direction of the positive electrode current collector here. The negative electrode includes a negative electrode current collector with a band shape and a negative electrode active material layer provided in a band shape along a longitudinal direction of the negative electrode current collector here. In another embodiment, however, the electrode body 20 may be a stack type electrode body formed in a manner that a plurality of square positive electrodes and a plurality of square negative electrodes are stacked in the insulated state.

As illustrated in FIG. 3, the positive electrode tab 23 is provided at one end part of the electrode body 20 in a winding axis direction (the width direction Y in FIG. 3). To the positive electrode tab 23, the positive electrode current collecting member 50 is attached. The positive electrode current collecting member 50 constitutes a conductive path that electrically connects the positive electrode terminal 30 and the positive electrode of the electrode body 20. In addition, the negative electrode tab 25 is provided at the other end part of the electrode body 20 in the winding axis direction (the width direction Y in FIG. 3). To the negative electrode tab 25, the negative electrode current collecting member 60 is attached. The negative electrode current collecting member 60 constitutes a conductive path that electrically connects the negative electrode terminal 40 and the negative electrode of the electrode body 20.

The electrolyte solution may be similar to the conventional electrolyte solution without particular limitations. The electrolyte solution is typically a nonaqueous electrolyte solution containing a nonaqueous solvent and a supporting salt (electrolyte salt). Examples of the nonaqueous solvent include carbonates, esters, ethers, nitriles, sulfones, lactones, and the like. Any of these can be used alone, or two or more kinds thereof can be used in combination. In particular, the carbonates are preferable. As the electrolyte salt, for example, a fluorine-containing lithium salt such as lithium hexafluorophosphate (LiPF₆) or lithium tetrafluoroborate (LiBF₄) can be used. The electrolyte solution may additionally contain an additive as necessary.

As illustrated in FIG. 1, the spacer 200 is disposed between the plurality of electrical energy storage devices 100 in the arrangement direction X here. However, it is only necessary that the spacer 200 is disposed at least between the two electrical energy storage devices 100 (the first electrical energy storage device 100 and the second electrical energy storage device 100) that are adjacent in the arrangement direction X, and the spacer 200 is not necessarily disposed between all the electrical energy storage devices 100. The spacer 200 is in contact (direct contact) with the long side surface 12b of the electrical energy storage device 100 here. In another embodiment, however, another member (for example, a conventionally known heat insulating material or the like) may be provided between the electrical energy storage device 100 and the spacer 200.

In some embodiments, the spacer 200 preferably has an insulating property. In this specification, the term "insulating property" refers to a volume resistivity, which is measured based on JIS K6911:2006, of 1.0 × 10¹⁰ Ω·cm or more. The volume resistivity of the spacer 200 is preferably 1.0 × 10¹² Ω·cm or more.

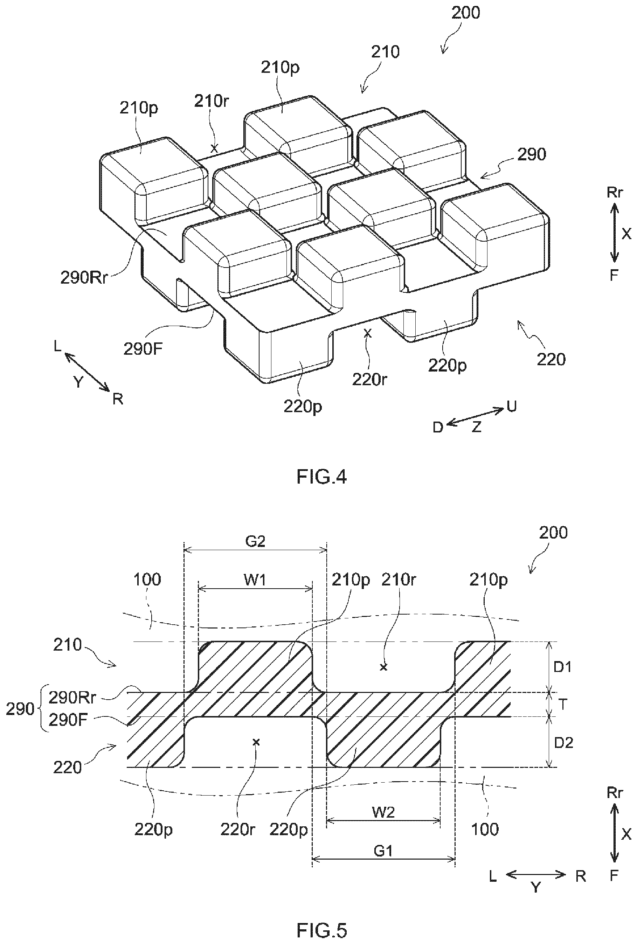

FIG. 4 is a perspective view schematically illustrating a part of the spacer 200. FIG. 5 is a longitudinal cross-sectional view schematically illustrating a part of the spacer 200. As illustrated in FIG. 4 and FIG. 5, the spacer 200 includes a base part 290, a first uneven structure 210, and a second uneven structure 220. The base part 290 is a part having a flat plate shape and substantially uniform thickness. A thickness T (average length in the arrangement direction X) of the base part 290 is preferably about 0.1 to 5 mm and more preferably 0.3 to 2 mm, although there is no particular limitation. Providing the base part 290 can improve the productivity or the workability when disposing the spacer 200 between the plurality of electrical energy storage devices 100.

The base part 290 is an elastic body and is configured to be elastically deformable in the arrangement direction X. The material of the base part 290 is not limited in particular but is preferably a polymer material. More preferable examples thereof include rubbers (thermosetting elastomers) such as silicone rubber, fluorine rubber, urethane rubber, natural rubber, styrene butadiene rubber, butyl rubber, ethylene propylene rubber (EPM, EPDM), butadiene rubber, isoprene rubber, and norbornene rubber. In particular, silicone rubber and EPDM are preferable.

The base part 290 includes a first surface 290Rr facing the first electrical energy storage device 100 and a second surface 290F facing the second electrical energy storage device 100. Each of the first surface 290Rr and the second surface 290F is a surface facing the long side surface 12b of the electrical energy storage device 100 here. Each of the first surface 290Rr and the second surface 290F is a surface intersecting with the arrangement direction X and extends along a YZ plane in FIG. 4. Regarding the first surface 290Rr and the second surface 290F, the width (average length in the width direction Y) and/or the height (average length in the height direction Z) is preferably substantially the same (about ±1 cm) as that of the opposing surface (here, the long side surface 12b) of the electrical energy storage device 100. This makes it easier to position with respect to the electrical energy storage device 100 and accordingly, the productivity or the workability of the electrical energy storage module 500 can be improved.

The first uneven structure 210 is provided on the first surface 290Rr of the base part 290. The first uneven structure 210 includes a plurality of first protrusion parts 210p projecting toward the first electrical energy storage device 100, and a first depression part 210r provided between the first protrusion parts 210p that are adjacent in a predetermined direction (here, the width direction Y or the height direction Z). The first protrusion part 210p is provided rising on the first surface 290Rr of the base part 290. The first protrusion part 210p extends from the first surface 290Rr of the base part 290 to the long side surface 12b of the first electrical energy storage device 100 here.

The second uneven structure 220 is provided on the second surface 290F (a surface on the opposite side of the first surface 290Rr) of the base part 290. The second uneven structure 220 includes second protrusion parts 220p projecting at least toward the second electrical energy storage device 100. The second uneven structure 220 here includes, similarly to the first uneven structure 210, the plurality of second protrusion parts 220p, and a second depression part 220r provided between the second protrusion parts 220p that are adjacent in the predetermined direction (here, the width direction Y or the height direction Z). The second protrusion part 220p is provided rising on the second surface 290F of the base part 290. The second protrusion part 220p extends from the second surface 290F of the base part 290 to the long side surface 12b of the second electrical energy storage device 100 here.

The first protrusion parts 210p and the second protrusion parts 220p are formed integrally with the base part 290 here. The first protrusion part 210p and the second protrusion part 220p are formed of the same material as the base part 290 here. In another embodiment, however, the first protrusion part 210p and/or the second protrusion part 220p may be formed of a material different from that of the base part 290 (for example, a resin material without elasticity, a metal material, ceramics, or the like). The first protrusion part 210p and the second protrusion part 220p are preferably formed of the same material. The shape, the size, and the like of the first protrusion part 210p and the second protrusion part 220p can be changed as appropriate in accordance with, for example, the shape, the size, the capacity, the restriction load, or the like of the electrical energy storage device 100.

In this embodiment, the first protrusion part 210p and the second protrusion part 220p have the same structure, shape, and size. In addition, the first depression part 210r and the second depression part 220r have the same shape and size. Therefore, although the first protrusion part 210p and the first depression part 210r of the first uneven structure 210 will be described in detail below as one example, the second protrusion part 220p and the second depression part 220r of the second uneven structure 220 can also be similar to those on the first uneven structure 210 side. In the following description about the structure, shape, and size, "the first protrusion part 210p" can be replaced by "the second protrusion part 220p" and "the first depression part 210r" can be replaced by "the second depression part 220r".

As illustrated in FIG. 4, the plurality of first protrusion parts 210p have the same structure, shape, and size here. The first protrusion part 210p does not have a hollow part here, that is, the first protrusion part 210p has a so-called solid structure (filled structure). In another embodiment, however, the first protrusion part 210p may have a hollow structure including, for example, a peripheral wall part extending toward the first electrical energy storage device 100 and a hollow part surrounded by the peripheral wall part. In this case, the outer shape of the hollow part may be either the same as the outer shape of the first protrusion part 210p or different from the outer shape of the first protrusion part 210p.

The outer shape of the first protrusion part 210p is a substantially prism shape (substantially quadrangular prism shape) here. In another embodiment, however, the outer shape of the first protrusion part 210p may be a circular cylindrical shape (including an elliptical cylindrical shape), a substantially polygonal prism shape other than the quadrangular prism shape (such as a substantially triangular prism shape or a substantially hexagonal prism shape), a substantially pyramidal shape, a substantially truncated pyramidal shape, a conical shape, a truncated conical shape, a dome shape, or the like. In some embodiments, the outer shape of the first protrusion part 210p is preferably the same (error in manufacture or the like is allowable) as the outer shape of the second protrusion part 220p on the opposite side, that is, on the second surface 290F side. This makes it easier to apply the load on the opposing electrical energy storage devices 100 with balance. Note that, in this specification, the term "substantially prism shape" encompasses, in addition to a perfect prism shape, a shape whose corner part connecting two sides has a rounded shape (rounded corner) as illustrated in FIG. 4, a shape having a notch at a corner part, and the like. This similarly applies to the other polygonal prism shapes and polygonal shapes that are described as "substantially X shapes".

As illustrated in FIG. 4, the outer shape of a surface of the first protrusion part 210p that faces the electrical energy storage device 100 (an opposing surface, a surface that is orthogonal to the arrangement direction X) is substantially quadrangular, specifically, substantially square. In another embodiment, however, the outer shape of the opposing surface of the first protrusion part 210p may be a substantially circular shape or a substantially polygonal shape other than a square shape (such as a substantially triangular shape or a rectangular shape). In some embodiments, the outer shape of the opposing surface of the first protrusion part 210p is preferably a regular polygonal shape or a circular shape. This makes it easier to apply the load with balance in a plane direction. Note that, in this specification, the term "substantially circular shape" encompasses, in addition to a perfect circular shape (perfect circle), a circular shape whose curvature of an arc is locally different (for example, an elliptical shape), a shape derived from a perfect circle or a circle, and the like.

Although there is no particular limitation, a projecting height D1 (the maximum length in the arrangement direction X) of the first protrusion part 210p is preferably larger than the thickness T of the base part 290 in a state where the load is not applied in the arrangement direction X (in a state before the assembling to the electrical energy storage module 500 and the compression with the restriction mechanism 300) as illustrated in FIG. 5. Therefore, the effect of the art disclosed herein can be achieved at a higher level. The projecting height D1 is preferably about 1 to 10 mm, more preferably 1 to 5 mm, and still more preferably 1 to 3 mm. In some embodiments, the projecting height D1 of the first protrusion part 210p is preferably the same as a projecting height D2 of the second protrusion part 220p on the opposite side, that is, on the second surface 290F side (error in manufacture or the like is allowable).

As illustrated in FIG. 5, a width (an average length in the width direction Y here) W1 of the first protrusion part 210p in a direction that is orthogonal to the arrangement direction X is preferably larger than the projecting height D1. This makes it difficult for the first protrusion part 210p to bend (buckle) in the arrangement direction X. The width W1 of the first protrusion part 210p is preferably about 2 to 30 mm, more preferably 3 to 20 mm, and still more preferably 5 to 10 mm. In some embodiments, the width W1 of the first protrusion part 210p is preferably the same (error in manufacture or the like is allowable) as a width W2 of the second protrusion part 220p on the opposite side, that is, on the second surface 290F side. Note that, in this specification, when the opposing surface of the first protrusion part 210p has a polygonal shape, the term "width W" refers to the diameter of a circumscribed circle and when the opposing surface of the first protrusion part 210p has a circular shape, the term "width W" refers to the diameter of the circular shape.

In some embodiments, a ratio (A2/A1) of a total area A2 of the opposing surfaces of the plurality of second protrusion parts 220p to a total area A1 of the opposing surfaces (upper surfaces) of the plurality of first protrusion parts 210p is preferably 0.5 to 2 and more preferably 1±0.2 (0.8 to 1.2). In this case, the effect of the art disclosed herein can be achieved at the higher level. In addition, the load is applied to the electrical energy storage device 100 more easily with balance. Note that, in this specification, "the total area A1" refers to the area of regions each surrounded by an outer edge of the first protrusion part 210p, and for example in the case where the first protrusion part 210p has the hollow structure, the regions of the hollow parts are also included in the area. This similarly applies to the total area A2.

As illustrated in FIG. 4, the first depression part 210r is a space with a substantially prism shape (substantially quadrangular prism shape) whose four sides are surrounded by four first protrusion parts 210p with a substantially prism shape that are adjacent in the first surface 290Rr here. The first depression part 210r is sectioned by the plurality of first protrusion parts 210p here. However, for example, in the case where the first protrusion part 210p has a circular cylindrical shape, the first depression part 210r is not sectioned clearly by the plurality of first protrusion parts 210p and may be one continuing space. As illustrated in FIG. 5, the depth of the first depression part 210r is the same as the projecting height D1 of the first protrusion part 210p.

As illustrated in FIG. 5, in the art disclosed herein, the second protrusion part 220p of the second uneven structure 220 is provided at a position corresponding to the first depression part 210r of the first uneven structure 210. The second protrusion part 220p of the second uneven structure 220 is not formed at a position facing the first protrusion part 210p of the first uneven structure 210. In this embodiment, moreover, the first protrusion part 210p of the first surface 290Rr is provided at the position corresponding to the second depression part 220r of the second surface 290F. The first protrusion part 210p of the first uneven structure 210 is not formed at a position facing the second protrusion part 220p of the second uneven structure 220. Even if the electrical energy storage device 100 expands, such a structure makes it possible for the spacer 200 to press the electrical energy storage device 100 stably with a predetermined restriction load and thus, the load necessary to keep the performance can be applied stably to the electrical energy storage device 100. The description is made below in detail.

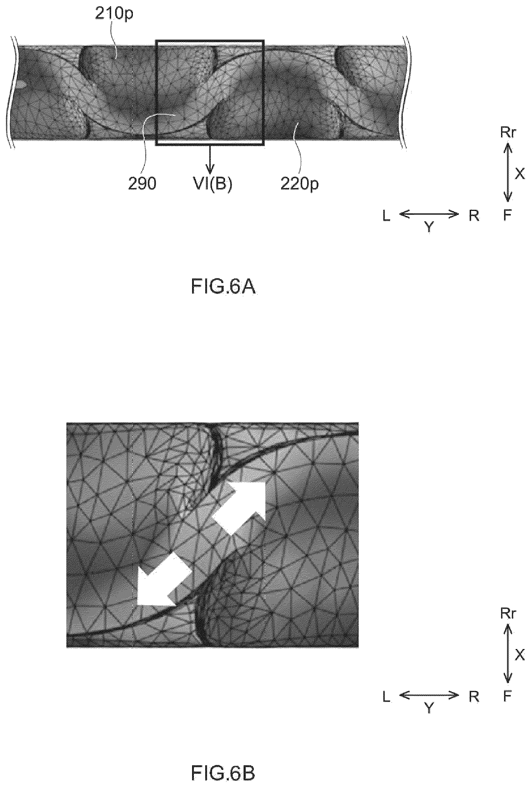

FIG. 6A represents results of simulation in which the spacer 200 is compressed, and FIG. 6B is a partial enlarged view of FIG. 6A. As represented in FIG. 6A, in this embodiment, when the load is applied from the arrangement direction X, the first depression part 210r and the second protrusion part 220p are crushed in the arrangement direction X and compressed and deformed so that their cross sections are enlarged compared to those in the state before the compression illustrated in FIG. 5. Thus, as indicated by arrows in the partial enlarged view in FIG. 6B, the base part 290 between the first depression part 210r and the second protrusion part 220p is elastically deformed so as to be stretched, and this results in the generation of force of "pulling" in the base part 290. By the operation of this pulling, the expansion of the electrical energy storage device 100 can be suitably absorbed in the spacer 200.

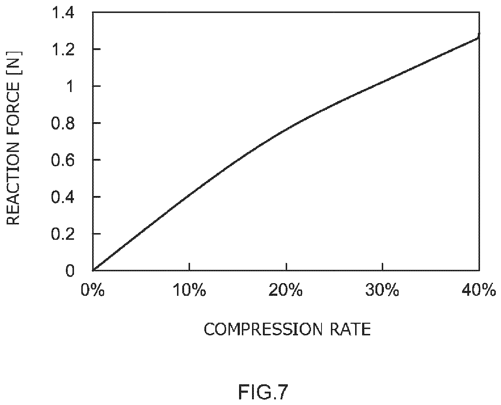

FIG. 7 represents results of simulation expressing a relation between the compression rate and the reaction force of the spacer 200. As represented by the results of simulation in FIG. 7, the compression rate and the reaction force of the spacer 200 are in the linear proportional relation in the art disclosed herein. Therefore, even when the compression rate of the spacer 200 becomes high because the electrical energy storage device 100 expands after the charging and discharging cycle, the relative increase in reaction force can be suppressed compared to the case in which the second protrusion part on the second surface side is provided at the position corresponding to the first protrusion part on the first surface side, for example. Accordingly, the electrical energy storage device 100 can be stably pressed with the predetermined load relatively. In addition, since it is unnecessary to enlarge the restriction mechanism in consideration of the increase in reaction force, the energy density of the electrical energy storage module 500 can be improved.

In a case where the spacer does not include the base part and has a wavy plate shape (bellows shape) in a cross-sectional view as described in, for example, Japanese Patent Application Publication No. 2006-253149 or Japanese Patent Application Publication No. 2017-126430, which is different from the art disclosed herein, the simulation according to the present inventor indicates that the expansion of the electrical energy storage device is absorbed using "compression deformation" of the wavy plate shaped part typically. Therefore, as the compression rate of the spacer increases, the reaction force increases exponentially. Depending on the thickness of the wavy plate shaped part, so-called buckling also occurs, resulting in a risk that the transition of the reaction force becomes unstable. On the other hand, using the operation of "pulling" as described in the art disclosed herein makes it possible to suppress more the excessive increase in reaction force when the compression rate of the spacer 200 becomes high as compared to the case of using "the compression deformation".

From the viewpoint of achieving the effect described above at the higher level, the first depression part 210r of the first surface 290Rr is preferably larger than the outer shape of the second protrusion part 220p of the second surface 290F. As illustrated in FIG. 5, in the cross-sectional view in the arrangement direction X, a width G1 of the first depression part 210r is preferably larger than the width W2 of the second protrusion part 220p (W2 < G1). A difference (G1 - W2) between the width G1 of the first depression part 210r and the width W2 of the second protrusion part 220p is preferably more than or equal to the thickness T of the base part 290. Thus, the force of "pulling" is easily generated in the base part 290 and the aforementioned effect can be achieved at the higher level. The difference (G1 - W2) is preferably five times or less, more preferably three times or less, still more preferably twice or less, and particularly preferably 1.5 times or less the thickness T of the base part 290.

Similarly, a width G2 of the second depression part 220r is preferably larger than the width W1 of the first protrusion part 210p (W1 < G2). A difference (G2 - W1) between the width G2 of the second depression part 220r and the width W1 of the first protrusion part 210p is preferably more than or equal to the thickness T of the base part 290. The difference (G2 - W1) is preferably five times or less, more preferably three times or less, still more preferably twice or less, and particularly preferably 1.5 times or less the thickness T of the base part 290.

In some embodiments, the second protrusion part 220p of the second uneven structure 220 is preferably provided so that its axial line (central axis) overlaps with a center of the first depression part 210r of the first uneven structure 210.

In some embodiments, as illustrated in FIG. 4, the plurality of first protrusion parts 210p are preferably aligned in at least one direction intersecting with the arrangement direction X. The plurality of first protrusion parts 210p are aligned in the width direction Y (a first direction) and the height direction Z (a second direction) that intersect with the arrangement direction X here.

In some embodiments, in at least one of the first uneven structure 210 and the second uneven structure 220, the plurality of protrusion parts preferably exist in a scattering manner in an island (spot)-like shape in the surface so that the plurality of protrusion parts do not come into contact with each other in the state where the load is not applied in the arrangement direction X. In one example, the plurality of first protrusion parts 210p of the first uneven structure 210 preferably exist in the scattering manner in an island (spot)-like shape in the first surface 290Rr so that the plurality of first protrusion parts 210p do not come into contact with each other in the state where the load is not applied in the arrangement direction X. In other words, it is preferable that a predetermined gap be secured between the first protrusion parts 210p adjacent to each other in the first surface 290Rr, and the first protrusion part 210p and the first depression part 210r be provided alternately in the plane direction. In one example, moreover, the plurality of second protrusion parts 220p of the second uneven structure 220 preferably exist in the scattering manner in the island-like shape in the second surface 290F so that the plurality of second protrusion parts 220p do not come into contact with each other in the state where the load is not applied in the arrangement direction X. Thus, the region of the uneven structure increases compared to the case in which the first protrusion parts 210p and/or the second protrusion parts 220p are provided in a rib (strip)-like shape, for example, and the effect of the art disclosed herein can be achieved at the higher level. In some embodiments, the first protrusion parts 210p and/or the second protrusion parts 220p that are adjacent to each other are preferably disposed so that they do not come into contact with each other even when the load is applied from the arrangement direction X.

As illustrated in FIG. 4, in this embodiment, in the first uneven structure 210, the first protrusion parts 210p and the first depression parts 210r are provided regularly (in a predetermined pattern) in the plane direction. Specifically, these parts are disposed in a checked pattern in the plan view. Similarly, in the second uneven structure 220 on the opposite side, the second protrusion parts 220p and the second depression parts 220r are also provided regularly (in a predetermined pattern) in the plane direction. Specifically, these parts are disposed in a checked pattern in the plan view. Thus, the effect of the art disclosed herein can be achieved at the higher level.

The electrical energy storage module 500 can be used for various applications; for example, the electrical energy storage module 500 can be suitably used as a motive power source for a motor (power source for driving) that is mounted on a vehicle such as a passenger car or a truck. The vehicle is not limited to a particular type, and may be, for example, a plug-in hybrid electric vehicle (PHEV), a hybrid electric vehicle (HEV), or a battery electric vehicle (BEV).

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed.

As described above, the following items are given as specific aspects of the art disclosed herein.
Item 1: The electrical energy storage module including: the first electrical energy storage device and the second electrical energy storage device that are disposed along the arrangement direction; the spacer that is disposed between the first electrical energy storage device and the second electrical energy storage device; and the restriction member that restricts the first electrical energy storage device, the second electrical energy storage device, and the spacer in the arrangement direction, in which the spacer includes the base part with the flat plate shape that includes the first surface facing the first electrical energy storage device and the second surface facing the second electrical energy storage device and is configured to be elastically deformable in the arrangement direction, the first uneven structure that is provided on the first surface of the base part and includes the plurality of first protrusion parts projecting to the side of the first electrical energy storage device and the first depression part provided between the adjacent first protrusion parts, and the second uneven structure that is provided on the second surface of the base part and includes the second protrusion part projecting at least to the side of the second electrical energy storage device, and the second protrusion part of the second uneven structure is provided at the position corresponding to the first depression part of the first uneven structure.
Item 2: The electrical energy storage module according to Item 1, in which the first depression part of the first uneven structure is larger than the outer shape of the second protrusion part of the second uneven structure.
Item 3: The electrical energy storage module according to Item 2, in which in the cross-sectional view in the arrangement direction, the difference (G1 - W2) between the width G1 of the first depression part and the width W2 of the second protrusion part is more than or equal to the thickness of the base part.
Item 4: The electrical energy storage module according to any one of Items 1 to 3, in which in the state where the load is not applied in the arrangement direction, the plurality of first protrusion parts of the first uneven structure exist in the scattering manner in the first surface so that the plurality of first protrusion parts do not come into contact with each other.
Item 5: The electrical energy storage module according to any one of Items 1 to 4, in which in the first uneven structure, the first protrusion parts and the first depression part are disposed in the checked pattern in the plan view.
Item 6: The spacer for the electrical energy storage module, the spacer being disposed between the first electrical energy storage device and the second electrical energy storage device that are disposed along the arrangement direction, and including: the base part with the flat plate shape that includes the first surface facing the first electrical energy storage device and the second surface facing the second electrical energy storage device and is configured to be elastically deformable in the arrangement direction; the first uneven structure that is provided on the first surface of the base part and includes the plurality of first protrusion parts projecting to the side of the first electrical energy storage device and the first depression part provided between the adjacent first protrusion parts; and the second uneven structure that is provided on the second surface of the base part and includes the second protrusion part projecting at least to the side of the second electrical energy storage device, in which the second protrusion part of the second uneven structure is provided at the position corresponding to the first depression part of the first uneven structure.

### [Reference Signs List]

10 Battery case
20 Electrode body
100 Electrical energy storage device
200 Spacer
210 First uneven structure
210p First protrusion part
210r First depression part
220 Second uneven structure
220p Second protrusion part
220r Second depression part
290 Base part
300 Restriction mechanism
500 Electrical energy storage module
X Thickness direction (arrangement direction)

## Claims

1. An electrical energy storage module (500) comprising:
a first electrical energy storage device (100) and a second electrical energy storage device (100) that are disposed along an arrangement direction (X);
a spacer (200) that is disposed between the first electrical energy storage device (100) and the second electrical energy storage device (100); and
a restriction mechanism (300) that restricts the first electrical energy storage device (100), the second electrical energy storage device (100), and the spacer (200) in the arrangement direction (X), wherein
the spacer (200) includes
a base part (290) with a flat plate shape that includes a first surface (290Rr) facing the first electrical energy storage device (100) and a second surface (290F) facing the second electrical energy storage device (100) and is configured to be elastically deformable in the arrangement direction (X),
a first uneven structure (210) that is provided on the first surface (290Rr) of the base part (290) and includes a plurality of first protrusion parts (210p) projecting to a side of the first electrical energy storage device (100) and a first depression part (210r) provided between the adjacent first protrusion parts (210p), and
a second uneven structure (220) that is provided on the second surface (290F) of the base part (290) and includes a second protrusion part (220p) projecting at least to a side of the second electrical energy storage device (100), and
the second protrusion part (220p) of the second uneven structure (220) is provided at a position corresponding to the first depression part (210r) of the first uneven structure (210).

2. The electrical energy storage module (500) according to claim 1, wherein the first depression part (210r) of the first uneven structure (210) is larger than an outer shape of the second protrusion part (220p) of the second uneven structure (220).

3. The electrical energy storage module (500) according to claim 2, wherein in a cross-sectional view in the arrangement direction (X), a difference (G1 - W2) between a width G1 of the first depression part (210r) and a width W2 of the second protrusion part (220p) is more than or equal to a thickness of the base part (290).

4. The electrical energy storage module (500) according to any one of claims 1 to 3, wherein in a state where a load is not applied at least in the arrangement direction (X), the plurality of first protrusion parts (210p) of the first uneven structure (210) exist in a scattering manner in the first surface (290Rr) so that the plurality of first protrusion parts (210p) do not come into contact with each other.

5. The electrical energy storage module (500) according to any one of claims 1 to 4, wherein in the first uneven structure (210), the first protrusion parts (210p) and the first depression part (210r) are disposed in a checked pattern in a plan view.

6. A spacer (200) for an electrical energy storage module (500), the spacer (200) being disposed between a first electrical energy storage device (100) and a second electrical energy storage device (100) that are disposed along an arrangement direction (X), and comprising:
a base part (290) with a flat plate shape that includes a first surface (290Rr) facing the first electrical energy storage device (100) and a second surface (290F) facing the second electrical energy storage device (100) and is configured to be elastically deformable in the arrangement direction (X);
a first uneven structure (210) that is provided on the first surface (290Rr) of the base part (290) and includes a plurality of first protrusion parts (210p) projecting to a side of the first electrical energy storage device (100) and a first depression part (210r) provided between the adjacent first protrusion parts (210p); and
a second uneven structure (220) that is provided on the second surface (290F) of the base part (290) and includes a second protrusion part (220p) projecting at least to a side of the second electrical energy storage device (100), wherein the second protrusion part (220p) of the second uneven structure (220) is provided at a position corresponding to the first depression part (210r) of the first uneven structure (210).
